# EUROPEAN PATENT SPECIFICATION

(11) **EP 1 427 541 B1**
(45) Date of publication and mention of the grant of the patent: **17.11.2010**
(21) Application number: 02731402.0
(22) Date of filing: 18.04.2002
(51) Int. Cl.: B05D 1/00

(54) **SPIN COATING PROCESS**
ZENTRIFUGALBESCHICHTUNGSVERFAHREN
PROCÉDÉ DE REVÊTEMENT PAR CENTRIFUGATION

(30) Priority: 19.04.2001 US 285088 P; 19.04.2001 US 285022 P; 19.04.2001 US 285014 P
(43) Date of publication of application: 16.06.2004
(73) Proprietor: SABIC Innovative Plastics IP B.V., 4612PX Bergen op Zoom (NL)
(72) Inventor: REITZ, John, B., Clifton Park, NY 12065 (US); CHENG, Minquan, Evansville, IN 47712 (US); DIETZ, Albert, G., III, Mount Vernon, IN 47620 (US); FEIST, Thomas, P., Clifton Park, NY 12065 (US); GALLUCCI, Robert, R., Mount Vernon, IN 47620 (US); GORCZYCA, Thomas, B., Schenectady, NY 12303 (US)
(74) Representative: Bublak, Wolfgang
(86) International application number: PCT/US2002/012132
(87) International publication number: WO 2002/085537

(56) References cited:
- EP-A- 0 643 334
- WO-A-98/22541
- WO-A-98/57757
- GB-A- 2 141 637
- US-A- 3 730 760
- US-A- 5 837 319
- US-B1- 6 183 810

## Description

Optical, magnetic and magneto-optic media are primary sources of high performance storage technology that enable high storage capacity coupled with a reasonable price per megabyte of storage. Areal density, typically expressed as billions of bits per square inch of disk surface area (Gbits per square inch (Gbits/in²)), is equivalent to the linear density (bits of information per inch of track) multiplied by the track density in tracks per inch. Improved areal density has been one of the key factors in the price reduction per megabyte, and further increases in areal density continue to be demanded by the industry.

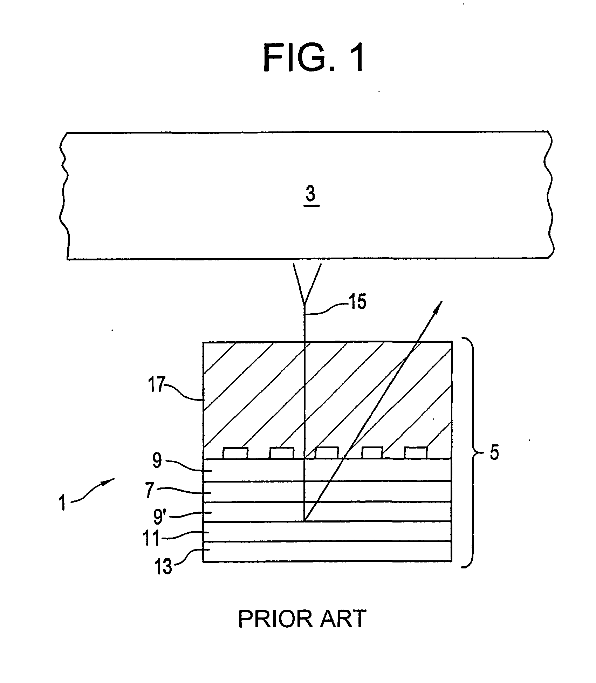

Referring to Figure 1, a low areal density system 1 (i.e., areal density of less than 5 Gbits/in²) is illustrated having a read device 3 and a recordable or re-writable storage media 5. The storage media 5 comprises conventional layers, including a data layer 7, dielectric layers 9 and 9', reflective layer 11, and protective layer 13. During operation of the system 1, a laser 15, produced by the read device 3, is incident upon the optically clear substrate 17. The laser passes through the substrate 17, and through the dielectric layer 9, the data layer 7 and a second dielectric layer 9'. The laser 15 the reflects off the reflective layer 11, back through the dielectric layer 9', the data layer 7, the dielectric layer 9, and the substrate 17 and is read by the read device 3.

Unlike the CD and beyond that of the DVD, storage media having high areal density capabilities, typically greater than 5 Gbits/in², typically employ first surface or near field read/write techniques in order to increase the areal density. For such storage media, although the optical quality of the substrate is not relevant, the physical and mechanical properties of the substrate become increasingly important. For high areal density applications, including first surface applications, the surface quality of the storage media can affect the accuracy of the reading device, the ability to store data, and replication qualities of the substrate.

Typically, the storage media comprises multiple layers that often consist of multiple stacked, sputter deposited layers or films on a substrate such as glass or aluminum. Possible layers include reflective layers, dielectric layers, data storage layers and protective layers. Due to the very low tolerances between the read/write device and the storage media, the quality of the layers, e.g., surface finish, percent of imperfections, etc., is a major factor controlling and even limiting the production of the media.

WO 98/22541 discloses a coating process for spincoating a polymeric material on a silicon substrate, comprising preparing a heated solution of polymeric material and spincoating at least one layer of the hot solution of polymeric material on at least a portion of a surface of the silicon substrate.
US-A 5,837,319 discloses a process for spin coating a substrate comprising providing a spiral-grooved substrate, applying a liquid coating composition to the substrate, spinning the substrate at a speed of less than or equal to 500 rpm until the coating composition, at a inner diameter of the substrate has reached a thickness, accelerating the rotational speed of the substrate in two linked steps, the first step comprising accelerating the rotational speed at a first rate of about 300 rpm/sec to 1200 rpm/sec or, until the rotational speed of the substrate is less than or equal to 3000 rpm, and the second step comprising accelerating the rotational speed of the substrate at a second rate of greater than or equal to 3000 rpm/sec during which the coating solvent is evaporated.

In another embodiment, A spin coating process, comprising: spinning a substrate, dispensing a solution onto the substrate while moving a dispenser over the substrate via an arc translation, and spinning the substrate to coat the substrate with the solution.

The above described and other features are exemplified by the following figures and detailed description.

Referring now to the figures wherein the like elements are numbered alike:
Figure 1 is a cross-sectional illustration of a prior art low areal density system employing an optically clear substrate;
Figure 3 is a graphical representation of thermal annealing time (bake time) versus roughness;

The present invention relates to a spin coating process comprising:
dispensing a solution of a solution solvent and 3 to 30 wt% plastic, based upon the total weight of the solution, to a substrate, spinning the substrate, and removing the solution solvent to produce a coated substrate comprising a coating having less than or equal to 10 asperities over the entire surface of the coated substrate, characterized in that
the solution solvent further comprises a first solvent having a boiling point of 125°C to 180°C and a second solvent having a boiling point of 190 °C or greater, and
   spinning the substrate to coat the substrate with the solution.

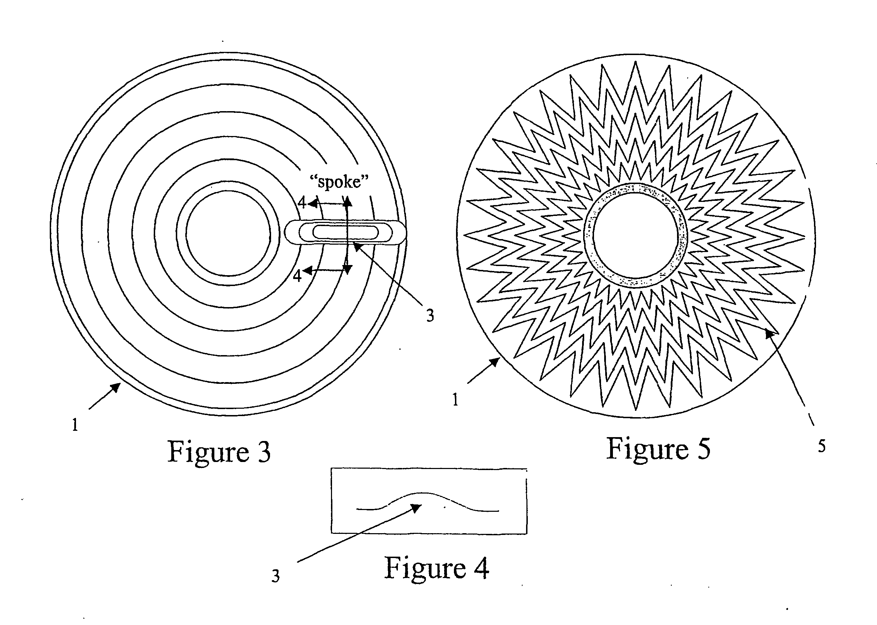

   Figure 3 is a top view of a spin coated substrate wherein the coating formed "spokes";

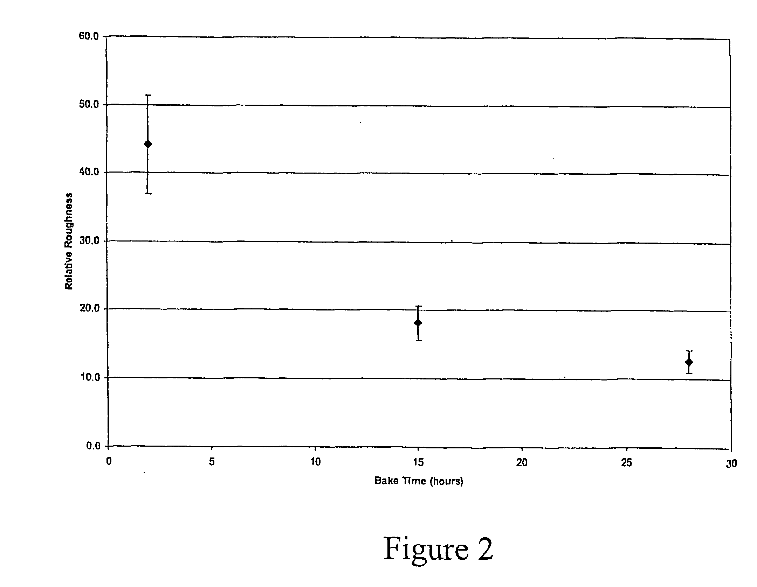

   Figure 4 is a cross-sectional view taken along lines 4-4 of Figure 2, illustrating a spoke;
   Figure 5 is a top view of a spin coated substrate wherein the coating formed a "starburst";

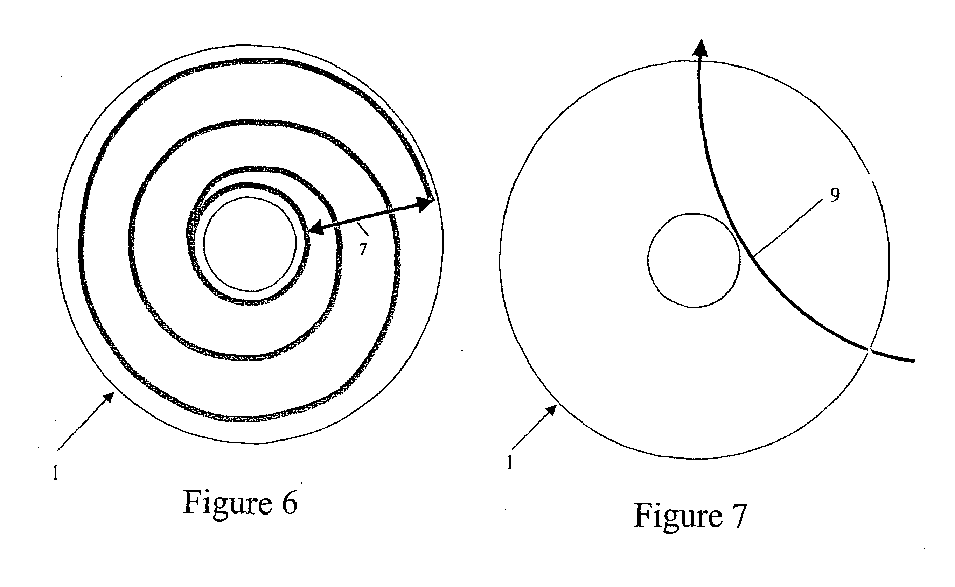

   Figure 6 is a top view of a substrate illustrating one motion of a dispense arm in dispensing the material to be spin coated onto the substrate;
   Figure 7 is a top view of a substrate illustrating another motion of a dispense arm in dispensing the material to be spin coated onto the substrate; and

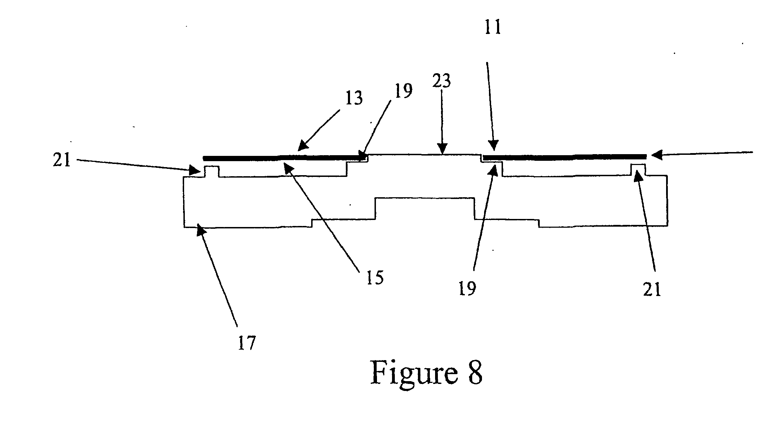

   Figure 8 is a cross-sectional side view of a spin chuck designed to reduce backside contamination and asperities.

For some embodiments of storage media, it is desirable to spin coat a layer of plastic either onto the finished disk and/or onto the underlying substrate for purposes of protection, planarization, and/or to enable the production of physical topography (e.g., pits, grooves, and the like) into the finished media. In these applications, there is often difficulty in meeting the surface quality, waviness, and asperity requirements due to imperfections in this coating process.

Stringent surface quality requirements of many data storage media can be difficult to meet, especially with spin coated plastic underlayer(s). The typical requirements for unpatterned data zones include low roughness (e.g., a roughness (Rₐ) of 20 Angstroms (Å) or less, with 10Å or less preferred, and 5Å or less more preferred), micro-(and macro-) waviness (for example, as measured by a peak to valley deviation over an square millimeter (mm²) area), of less than or equal to 35 nanometers (nm), with less than or equal to 25 nm preferred, and less than or equal to 15 nm more preferred), and asperities (less than or equal to 5, with less than or equal to 3 preferred, and less than or equal to 1 more preferred, over the entire surface of a disk (e.g., having a surface area of greater than or equal to 6,500 square millimeters (mm²)) wherein the asperity has a height of less than or equal to 50 nm, with a height of less than or equal to 25 nm preferred, and less than or equal to 15 nm more preferred). An asperity refers to any undesired surface feature which projects above the top surface of the media. For magnetic media, quality requirements are even more stringent. For example, the surface roughness is preferably less than or equal to 5Å Rₐ, and microwaviness is preferably less than or equal to 15 nm (measured peak to valley deviation over an 4 mm² area). Additional requirements of media constructed with a plastic layer include adhesive strength of that layer to the substrate. Adhesive, or peel, strength can be measured via any number of methods known in the art. One such method involves first depositing 1,000Å of titanium to the polymer film. Upon the titanium is further deposited 1,000Å of copper. Lastly 25 micrometers of copper are electroplated on top of these sputtered films. A 0.32 cm (1/8 inch) wide by greater than or equal to 2.54 cm (1 inch) long metal line is patterned by either etching or scribing through the metal layers. One end of the patterned line is peeled up from the substrate to a length of 0.64 cm (0.25 inches). This sample is placed into a force measurement system (e.g., available form Ametek Inc.) and the force required to peel the patterned metal line from the substrate at a rate of 15 millimeters per minute (mm/min) is measured. The value obtained is multiplied by 1.424 (8) to obtain the kg/cm (pounds per inch (lbs/in)) peel strength. As measured by this method, a peel strength of greater than or equal to 0,178 kg/cm (1lbs/in) is acceptable, with greater than or equal to 0.357 kg/cm (2 lbs/in) preferred.

Meeting these requirements can be achieved by dispensing the plastic onto the surface of the substrate in a fashion to reduce or even eliminate undesired surface imperfections (e.g., asperities, microwaviness, thickness non-uniformity (e.g., edge bead, "spoking", "starbursts", and the like) and roughness (e.g., greater than 20Å), through the use of a chuck design which inhibits contamination, through the proper choice of polymer to be spincoated, solution for the plastic to be spin coated from, by annealing thermoplastics at a temperature equal to or greater than the glass transition temperature (T_{g}) of the plastic, or annealing thermosets at or above the intrinsic material's softening point (yet below the temperature that will induce crosslinking), and/or by employing thermoplastic polymers with the proper characteristics.

During spin coating of a substrate with a hole in the middle (e.g., a data storage media, and the like comprising a symmetric geometry), an arm can be translated to an inner radius of the spinning substrate where a solution (e.g., comprising plastic and solvent) is dispensed. This creates a ring of solution, which, once formed, is subject to centrifugal forces at a sufficient rate to spread the coating solution across the substrate. This ring dispense method, however, has the potential to cause significant deviations in film thickness uniformity over the surface of the substrate. These non-uniformities can manifest in a number of ways, with two of the most common being a "spoke" which takes the form of a relatively thin, inner diameter to outer diameter dome-like structure (see Figures 3 and 4) and a "starburst" pattern (Figure 5) which is manifest as a circumferential deviation in film thickness. In these Figures, the inner diameter to outer diameter wedge shape of film thickness which is typical of spin coated films on substrates with center holes is represented by contour lines (thinner film at inner diameter and thicker film at outer diameter) with spoking and starburst deviations represented by additional or modified contour lines.

Employment of spin coating to attain a substantially uniform thickness (e.g., a thickness deviation of less than or equal to 10%, with a thickness deviation of less than or equal to 5% preferred), can be achieved through the use of a coating solution having a viscosity that attains a better knitting between the initial dispense solution and the last of the dispense solution (e.g., where the beginning and the end of the dispense ring meet to form the ring). Coating solution viscosities of less than or equal to 2,000 centipoise (cps) can be employed, with less than or equal to 750 cps preferred, and less than or equal to 500 cps even more preferred. The lower the viscosity, the more the material tends to spread uniformly and produce a less pronounced knit line prior to spin-off.

Alone, or in addition to employing a reduced viscosity coating solution, the desired thickness uniformity can be obtained by employing a dynamic dispense methodology that produces a more uniform solution ring at or near the inner diameter of the substrate. One dispense pattern which can achieve substantial thickness uniformity comprises dispensing the solution while translating the dispense arm from the outer diameter to the inner diameter of the area to be coated while the disk is spinning. (See Figure 6) Preferably, once the inner diameter to be coated is reached, the arm is held over that area for at least one full revolution, whereupon the arm is retranslated back to the outer diameter of the substrate and the solution dispense is ended. This method results in a spiral of solution across the surface of the disk and a uniform ring of solution at the inner diameter. Since the abrupt start and stoppage of coating solution is not performed at the inner diameter of the area to be coated, imperfections in the inner ring from this are avoided, and thickness uniformity is attained (e.g., thickness deviations of down to and below 5%).

Alternatively, the dispense arm can be translated in an arc across the disk. (See Figure 7) If this is performed while the disk is spinning at some nominal speed (for example 120 revolutions per minute (rpm)), then a uniform ring of solution can be dispensed at the desired coating inner diameter. As with the other dispensing method, this enables the dispense of a substantially uniform inner ring and results in the production of a uniform thickness coating on the substrate.

Along with a substantially uniform thickness, a low number of asperities is also desired. Since asperities are often caused by particulate contamination in the coating solution (e.g., from the plastic and/or the solvent), and/or undissolved polymer gels, and redeposit of spun-off material during the spin coating process, filtering the coating solution prior to dispensing is preferred. Using filters (e.g., polytetrafluoroethylene (PTFE), ultrahigh density polyethylene (UPE), and the like) in single diaphragm or stacked form can significantly reduce the number of asperities on a spin coated substrate. Since the use of smaller pore size filters can reduce the number and size of asperities versus filter systems with greater nominal pore sizes, filters having a nominal pore size of less than or equal to 100 nm is preferred, with a nominal pore size of less than or equal to 50 nm more preferred, and less than or equal to 25 especially preferred. This filtration can be prior to dispensing of the coating solution and/or can be a point filtration at the dispense step.

In addition to filtering, the use of a spin chuck that has one or more physical protrusions can assist in the reduction in the number and size of asperities. Referring to Figure 8, the protrusions 21 prevent spun-off material from looping back onto the top surface of the disk 13, or the backside 15. In applications where both sides of the substrate will be coated, prevention of backside contamination will also be a factor to be addressed.

As stated above, backside contamination can also be an issue in forming a data storage media. Contamination can further be a result of contact with the chuck itself. For example, upon removing a substrate (having coatings on both sides) from a chuck, contact with the chuck can cause asperities exceeding 25 nm, 50 nm, and even exceeding 100 nm. Referring again to Figure 8, material redeposit on the front and backside of the substrate and prevention of substrate - chuck contact in a coating area can be attained with the illustrated design. The chuck comprises a central portion 23 (commonly referred to as a hub) for engaging the hole in the substrate 1. When placed on the chuck, the substrate 1 engages a ledge 19 having an outer diameter that is preferably less than the inner diameter of the coating on the second side 15 of the substrate 1.

At or near the outer diameter of the substrate 1 is a protrusion 21 that preferably has a height less than the height of the ledge 19 such that, at rest, the substrate 1 does not physically contact the protrusion 21. Consequently, protrusion 21 has a height of less than the ledge height, with a protrusion height preferably sufficiently large to inhibit contaminants (and/or coating solution particles on the first side 13) from being drawn under the substrate 1 to the second side 15. Preferably the protrusion 21 has a height that is both less than the ledge height and greater than or equal to 85% of the ledge height, with a height of greater than or equal to 90% of the ledge height more preferred, a height of greater than or equal to 95% of the ledge height even more preferred, and a height of greater than or equal to 98% of the ledge 19 height especially preferred. The length of the protrusion ranges from a length sufficient to provide structural integrity under the operating conditions of the chuck to a length equivalent to or even exceeding the distance from the ledge 19 to the outer periphery of the substrate 1.

The overall outer diameter of the chuck is preferably substantially equivalent to or exceeds the outer diameter of the coating on the second side 15 of the substrate 1. Consequently, to inhibit backside contamination, at least the protrusion 21 should have an outer diameter substantially equivalent to or greater than the outer diameter of the backside coating. Optionally, the chuck may have an extension 17 having an outer diameter greater than the substrate 1 outer diameter. This extension 17 inhibits material (e.g., contaminants) from being spun off of the first side 13, and due to air currents, looping back and contaminating the first side 13.

As with asperities, other surface qualities fall within stringent specifications, such as microwaviness, roughness, flatness, and the like, to enable reliable head tracking and a sufficient signal to noise ratio to enable use of the media (e.g., reading and writing of the disk). One fashion of addressing these qualities in a substrate with a spin coated film comprises the type of solvent employed in the coating solution. In one embodiment, a solvent blend or mixture is preferred to attain the desired viscosity. If the solvent has too low of a boiling point (T_{b} less than 100°C) and thus too high of a volatility, then, upon spin off, localized drying and skinning of the film can result. Localized drying and skinning can cause stress gradients in the film that can lead to excessive striations and microwaviness. If the solvent boiling point is too high (T_{b} greater than about 180°C) then the solvent does not effectively volatilize during the spin coating process, thereby resulting in a film, after spinning, that has too low of a viscosity. Such a film can reflow after spinning in response to stress and surface tension (edge effects, substrate orientation) to create areas of film thickness non-uniformity. By employing a solvent blend, comprising a solvent with a low boiling point (T_{b}) of 125°C to 180°C (preferably 145°C to 165°C)) and a high T_{b} solvent (e.g., having a T_{b} of 190°C or greater), a spin coated film can be obtained having a surface quality of: Rₐ of less than or equal to 10Å and even less than or equal to 8Å, and a waviness, as measured by a peak to valley deviation over an 4 mm² area, of less than or equal to 25 nm and even less than or equal to 15 nm.

In contrast to using only a low T_{b} solvent or only a high T_{b} solvent, by using the solvent blend during spin coating of the coating solution, the low boiling solvent evaporates at a modest rate to dry the film and raise viscosity allowing the film to "set" and preventing easy reflow after the spin coating process is complete. Since the higher boiling solvent has reduced volatility, the film will not be over-dried to create localized areas of stress, which can contribute to thickness non-uniformities. Preferably the solvent comprises 5 to 50 weight percent (wt%) of low T_{b} solvent, with 25 wt% to 45 wt% low T_{b} solvent preferred, and 25 wt% to 35 wt% low T_{b} solvent more preferred, balance high T_{b} solvent, based upon the total weight of the solvent. Possible low T_{b} solvents include anisole (T_{b} of about 155°C), dichlorobenzene (T_{b} of about 180°C), xylene (T_{b} of about 140°C), and the like, as well as combinations comprising at least one of the foregoing solvents. Possible high T_{b} solvents include cresol (T_{b} of about 200°C), gamma-butyrolactone (T_{b} of about 206°C), acetophenone (T_{b} of about 203°C), N-methyl-pyrrolidone (T_{b} of about 202°C), and the like, as well as combinations comprising at least one of the foregoing solvents.

The solvent preferably comprises specific characteristics that facilitate the formation of a uniform spin coat with less than or equal to 5 asperities and less than or equal to 20 Å Rₐ, and even less than or equal to 3 asperities and less than or equal to 5Å Rₐ (e.g., for magnetic media applications). The first solvent of the solvent mixture characteristics preferably include: a) a boiling point, at atmospheric pressure of 125°C to 180°C; b) halogen free (i.e., less than 1% halogens); c) a moisture content of less than or equal to 5 wt%, with less than or equal to 1 wt% preferred, and less than or equal to 0.5% more preferred, based upon the total weight of the solvent; d) a pH of 5.5 to 9, with 6 to 8 preferred and 6.5 to 7.5 more preferred; e) a polarity index of 3 to 10 (Solvent Polarity described by L. R. Snyder, J. Chromatographic Science (Vol. 16) 223-234, (1978)), preferably at a pH of 6 to 8; f) a dielectric constant (K) of greater than or equal to 4, with greater than or equal to 10 preferred, again preferably at a pH of 6 to 8; g) a flash point of greater than or equal to 20°C greater than or equal to 50°C, with greater than or equal to 100°C preferred; h) a freezing point of less than or equal to 0°C, with less than or equal to -20°C preferred; with combinations comprising at least one of the foregoing characteristics preferred.

Some possible solvents include aryl acetates and C₄ - C₁₀ alkyl acetates, C₂-C₆ alkyl carbonates, formamides, C₁-C₆ N-alkyl formamides, C₁-C₆ alkyl sulfoxides, alkoxy alkyl acetates, C₁-C₆ N-alkyl pyrrolidones, phenols, C₁-C₆ alkyl phenols, aryl ethers, C₁-C₆ alky aryl ethers, C₁-C₆ alkyl ureas, C₄-C₆ sulfolanes, N-acetyl cyclic ethers, C₁-C₆ alky acetamides, C₁-C₆ alkyl phosphoramides, C₃-C₆ lactones, aryl alkyl ketones, and miscible combinations comprising at least one of the foregoing solvents. Examples of the solvents include butyl acetate, diethyl carbonate, formamide, methyl formamide, dimethyl formamide, dimethyl sulfoxide, methoxy ethyl acetate, N-methyl pyrrolidone, propylene carbonate, anisole, tetra methyl urea, dimethyl urea, sulfolane, methyl anisole, N-acetyl morpholane, dimethyl acetamide, mono methyl acetamide, veratole, hexamethyl phosphoramide, buytrolactone, acetophenone, phenol, cresol, mesitol, xylenol, and miscible combinations comprising at least one of the foregoing solvents. Solvents that, are not believed to be useful with the present process include water, acetic acid, formic acid, methanol, ethanol, ethanol amine, ammonia, methyl amine, dimethyl amine, ethyl amine, aniline, phenylene, diamines, diethyl ether, hexane, pentane, cyclohexane, cyclopentane, and petroleum ether.

Improvements in the roughness and microwaviness of a spin coated film can also be achieved by thermal annealing the film following coating. For a thermoplastic film, annealing at temperature above the thermoplastic's glass transition temperature (T_{g}), can allow the material to flow and self-level, thus promoting an improved roughness. Preferably, the film is annealed at a temperature and for a sufficient period of time to allow softening of the film without substantially cross-linking or other chemical modification, of greater than or equal to 25°C above the T_{g}, with greater than or equal to 50°C above the T_{g} more preferred, and greater than or equal to 100°C above the T_{g} most preferred. The smoothing, or planarization, caused by the annealing can be further improved by annealing for successively longer periods of time, with up to 2 hours or greater preferred, greater than or equal to 10 hours more preferred, and greater than or equal to 20 hours even more preferred.

Figure 2 shows the relationship between annealing time and roughness for a representative thermoplastic polymer, with the concept applicable to thermosets and other cross-linkable polymers by annealing them above their intrinsic softening temperature (e.g., temperatures of 100°C to 150°C for polyamic acid precursors of polyimides). As long as the annealing step is not a high enough temperature and/or long enough period of time to promote cross-linking or other chemical modification, improvements in roughness can be realized.

In order to improve adhesion of the coating to the substrate, optionally, an adhesion promoter, such as an organosilane or another adhesion promoter, can be used. If an adhesion promoter is employed, it is typically dissolved in a solvent, such as methanol, water, and the like, as well as combinations comprising at least one of the foregoing solvents, and is applied to the disk prior to applying the plastic. Once the adhesion promoter is spin coated onto the substrate, the coating solution is applied as described above. Some possible adhesion promoters include alkoxy silanes with alkylamino, alkylamide, alkylepoxy, and alkylmercapto funcaionalities.

For example, a polyetherimide resin (e.g., Ultem® resin grade 1000, commercially available from General Electric Company), is dissolved in anisole/gamma-butyrolactone solvent system (50:50 percent by weight (wt%) of the solvents and 15 wt% Ultem® resin). A substrate (metal (e.g., aluminum, or the like), glass, ceramic, polymer, metal-matrix composite, and alloys and combinations comprising at least one of the foregoing, or the like), which is optionally polished, is placed on the chuck, and held in place via a mechanical device or a vacuum. An adhesion promoter, such as 5 ml of 0.05% solution VM651 (an alphaaminopropyltriethoxysilane adhesion promoter commercially available from DuPont) in a water/methanol solution, is applied by dispensing it onto the spinning or stationary substrate. The substrate is then, preferably, spun to distribute the adhesion promoter, such as at a rate of up to 2,000 rpm or so for about 30 seconds or so. If an adhesion promoter is employed, the substrate can optionally be rinsed, such as with methanol, to remove excess adhesion promoter, and dried (e.g., air dried, vacuum dried, heat dried, or the like), prior to the application of the plastic.

The coating solution can be applied to the substrate as shown in Figures 3-5. Once the adhesion promoter has been applied, the coating solution can be applied to the substrate. The substrate is then spun to substantially uniformly spread the coating solution across the substrate, forming a film. The thickness of the film is dependent upon various parameters, e.g., the quantity of coating solution, the desired thickness, the viscosity of the coating solution, the spin rate, the spin duration, coating solution solids content, and environmental conditions (including temperature, humidity, atmosphere type, and atmospheric pressure), among others. Although a thickness below 0.1 micrometers (µm) can be attained, the film is preferably sufficiently thick to allow any desired surface features (e.g., pits, grooves, texturing, and the like) to be placed onto the film. Typically, a thickness of up to 50 µm or so is possible, with less than or equal to 10 µm preferred, and less than or equal to up to about 5 µm especially preferred for storage media type applications. Determination of a final thickness range will vary, in part, by the desired depth of any features to be placed onto the film as well as any surface imperfections on the substrate that need to be masked by the film.

With respect to spin duration and rate, which must be sufficient to disperse the coating solution across the substrate in the desired area, these parameters are chosen based on factors including, e.g., the coating solution viscosity and solids content, and the desired coating thickness; all interdependent parameters. Typically, however, the spin rate is greater than or equal to 2,000 revolutions per minute (rpm) for up to 25 seconds or more, with greater than or equal to about 4,000 rpm for less than or equal to about 15 seconds preferred. For example, a 3 µm thick coating can be applied using coating solution containing 15 wt% Ultem® resin grade 1000 in anisole/gamma-butyrolactone solvent, and a spin rate of 2,000 rpm for a duration of 25 seconds.

Once the coating has been dispersed across the substrate, it can be dried, preferably in an inert atmosphere, such as nitrogen, for a sufficient period of time to remove the solvent and polymerize the plastic precursor (if necessary for the particular embodiment), and at a rate affective to obtain the desired surface quality. The coated substrate can be raised to the desired temperature at a rate such that the solvent removal doesn't have deleterious effects on the surface features. For example, the coated substrate can be heated to greater than or equal to 200°C, with greater than or equal to about 250°C typically preferred, at a rate of less than or equal to 10 degrees per minute (deg/min), with a rate of less than or equal to 5 deg/min preferred, and a rate of less than or equal to 3 deg/min especially preferred. Once the substrate has attained the desired temperature, it is maintained at that temperature for a sufficient period of time to remove the solvent and, if necessary, to polymerize the polymer precursor, and is then cooled. Typically a period of up to several hours is employed, with less than or equal to 2 hours preferred, and a rate of minutes or portions thereof especially preferred. A substrate prepared in this manner, optionally with subsequent processing, can be used for data storage applications, such as magnetic hard drives, and the like.

In theory, the substrate and/or plastic coating on the substrate can comprise any plastic that exhibits appropriate properties, e.g., the plastic should be capable of withstanding the subsequent processing parameters (e.g., application of subsequent layers) such as sputtering (i.e., temperatures of room temperature up to and exceeding 200°C (typically up to or exceeding 300°C) for magnetic media, and temperatures of room temperature (25°C) up to 150°C for magneto-optic media). That is, it is desirable for the plastic to have sufficient thermal stability to prevent deformation during the deposition steps. For magnetic media, appropriate plastics include thermoplastics with glass transition temperatures preferably of greater than or equal to about 180°C and glass transition temperatures of greater than or equal to 200°C more preferred (e.g., polyetherimides, polyetheretherketones, polysulfones, polyethersulfones, polyether keytones, polyester carbonates, polyarylates, and polyphenylene sulfones, polyphenylene ethers, polyimides, high heat polycarbonates, and the like, as well as precursors, reaction products and combinations comprising at least one of the foregoing materials); with materials having glass transition temperatures of greater than or equal to 250°C even more preferred (e.g., polyetherimide in which sulfonedianiline or oxydianiline has been substituted for m-phenylenediamine, polyimides, and the like, as well as precursors, reaction products and combinations comprising at least one of the foregoing materials).

As various applications may require plastics with different glass transition temperatures, it may be advantageous to be able to adjust the glass transition temperature of a plastic (homopolymer, copolymer, or blend) to achieve a film with the desired glass transition temperature. To this end, polymer blends, such as those described in U.S. Patent No. 5,534,602 (to Lupinski and Cole, 1996), may be employed in the preparation of the coating solution. In this example, polymer blends provide, selectively, variable glass transition temperatures of 190°C to 320°C.

Some possible examples of thermoplastics include, but are not limited to, amorphous materials, crystalline materials, semi-crystalline materials, and precursors, reaction products and combinations comprising at least one of the foregoing materials. For example the plastic can comprise: polyvinyl chloride, polyolefins (including, but not limited to, linear and cyclic polyolefins and including polyethylene, chlorinated polyethylene, polypropylene, and the like), polyesters (including, but not limited to, polyethylene terephthalate, polybutylene terephthalate, polycyclohexylmethylene terephthalate, and the like), polyamides, polysulfones (including, but not limited to, hydrogenated polysulfones, and the like), polyimides, polyether imides, polyether sulfones, polyphenylene sulfides, polyether ketones, polyether ether ketones, ABS resins, polystyrenes (including, but not limited to, hydrogenated polystyrenes, syndiotactic and atactic polystyrenes, polycyclohexyl ethylene, styrene-coacrylonitrile, styrene-co-maleic anhydride, and the like), polybutadiene, polyacrylates (including, but not limited to, polymethylmethacrylate, methyl methacrylate-polyimide copolymers, and the like), polyacrylonitrile, polyacetals, polycarbonates, polyphenylene ethers (including, but not limited to, those derived from 2,6-dimethylphenol and copolymers with 2,3,6-trimethylphenol, and the like), ethylenevinyl acetate copolymers, polyvinyl acetate, liquid crystal polymers, ethylene-tetrafluoroethylene copolymer, aromatic polyesters, polyvinyl fluoride, polyvinylidene fluoride, polyvinylidene chloride, Teflons, and the like. For magnetic media, the preferred thermoplastics include polyimides, polyether imides, high heat (e.g., greater than or equal to 175°C) polycarbonates, polyester carbonates, polyarylate, polyphenelyene ethers, polysulfones, polyethersulfones, polyphenelyene sulfones, and combinations comprising at least one of the foregoing thermoplastics.

Additionally, it is possible for thermosets to be used in the arc dispense embodiments of the application, in addition, or alternative to the thermoplastics, provided the thermoset possess sufficient flow under the stamping conditions to permit formation of the desired surface features thermosetting resins such as epoxy, phenolic, alkyds, polyester, polyimide, polyurethane, mineral filled silicone, bismaleimides, cyanate esters, vinyl, and benzocyclobutene resins. Additionally, the plastic may comprise blends, precursors, copolymers, mixtures, reaction products and composites comprising at least one of the above mentioned thermoplastics and/or thermosets.

In one embodiment, the thermoplastic polymer employed comprises a unique combination of properties. One such property is its reactivity. In this embodiment, the thermoplastic polymer(s) are unreactive. In other words, the thermoplastic polymer comprises less than or equal to 20 milli-equivalents per kilogram (meq/Kg) reactive endgroups. Preferably, the thermoplastic polymer comprises less than or equal to 10 meq/Kg reactive endgroups. For example, reactive endgroups can include carboxylic acids, carboxylic salts, carboxylic anhydrides, amines, phenols, alcohols, nitriles, epoxides, oxetanes, alkenes, alkynes, cyclobutyl (e.g., cyclobutanes, cyclobutenes, and the like), isocyanates, cyanurates, oxazoles as well as combinations comprising at least one of the foregoing reactive endgroups. This thermoplastic polymer also preferably comprises a weight average molecular weight (Mw) of 10,000 to 500,000 Daltons, with 20,000 to 70,000 Daltons more preferred, as determined by gel permation chromatography (GPC) using methylene chloride as a solvent.

As further evidence of nonreactivity, the molecular weight of the thermoplastic polymer preferably changes less than or equal to 25% throughout the coating process (e.g., from before it is introduced to the solvent through embossing), with a molecular weight change of less than or equal to 10% preferred.

Further characteristics that enable reliable production of a spin coated substrate with the desired level of asperities and Rₐ, relate to the solution. Preferably, the solution has a pH of 5.5 to 8, with a pH of 6 to 7.5 more preferred. The viscosity of the solution is 1 to 30,000 centipoise, with 1 to 2,000 centipoise preferred, as determined by ASTM D1824. This viscosity of the solution preferably changes less than or equal to 25%, with less than or equal to 10% preferred, when tested at a temperature of 45°C for three hours.

The composition of the solution is also chosen to attain reliable production of the coating. Preferably, the solution comprises 3 to 30 wt% solids, based upon the total weight of the solution, with to 15 wt% solids preferred. The particle diameter of undesired contaminants (particles, gels, etc.) in the solution (measured along the major axis) is preferably less than or equal to 0.05 micrometers (µm), with less than or equal to 0.1 wt% of the total weight of the particles having a diameter larger than 0.05 µm preferred, e.g., as determined by laser light scattering. The solution also preferably comprises a water content of less than or equal to 5 wt%, with less than or equal to 2 wt% more preferred, and less than or equal to 0.5 wt% more preferred, based upon the total weight of the solution. The solution further preferably comprises a turbidity (e.g., percent haze), as measured by ASTM D1003, of less than or equal to 5%, with less than or equal to about 1% preferred.

Once the plastic coating has been applied to at least a portion of at least one side of the substrate, the coating can be embossed. Not to be limited by theory, due to the rheology of the plastic, not only can pits, grooves, bit patterns, servo-patterns, and edge features be embossed into the substrate, but the desired surface quality can also be embossed (e.g., desired smoothness, roughness, microwaviness, texturing (e.g., microtexturing for magnetic grain orientation) and flatness). The embossed surface features can have a depth of up to 200 nm or so. Typically a depth of greater than or equal to 5 nm, preferably greater than or equal to 10 nm, more preferably greater than or equal to 20 nm, preferably 50 nm, can be employed. In the lateral dimension, the surface features, particularly of a magnetic data storage media, would preferably have a "short" dimension of up to or exceeding 250 nm, with less than or equal to 200 nm more preferred, less than or equal to 150 nm even more preferred, and less than or equal to 100 nm especially preferred.

Subsequent to embossing or otherwise disposing the desired surface features into the coating layer, various additional layers can then be applied to the substrate through one or more techniques, e.g., sputtering, chemical vapor deposition, plasma-enhanced chemical vapor deposition, reactive sputtering, evaporation, spraying, painting, and the like, as well as combinations comprising at least one of the above techniques. Typically, the layers applied to the substrate may include one or more data storage layer(s) (e.g., magnetic, magneto-optic, optic, and the like), protective layer(s), dielectric layer(s), insulating layer(s), combinations comprising at least one of these layers, and others.

The data storage layer(s) may comprise any material capable of storing retrievable data, such as an optical layer, magnetic layer, or magneto-optic layer, having a thickness of up to 600Å, with a thickness up to 300Å preferred. Possible data storage layers include, but are not limited to, oxides (such as silicone oxide), rare earth element - transition metal alloys, nickel, cobalt, chromium, tantalum, platinum, terbium, gadolinium, iron, boron, others, and alloys and combinations comprising at least one of the foregoing, organic dye (e.g., cyanine or phthalocyanine type dyes), and inorganic phase change compounds (e.g., TeSeSn or InAgSb). Preferably, the data layer has a coercivity of at least 1,500 oersted, with a coercivity of 3,000 oersted or greater especially preferred.

The protective layer(s), which protect against dust, oils, and other contaminants, can have a thickness of greater than or equal to 100 µm to less than or equal to 10Å, with a thickness of less than or equal to 300Å preferred in some embodiments. In another embodiment, a thickness of less than or equal to 100 Å is especially preferred. The thickness of the protective layer(s) is usually determined, at least in part, by the type of read/write mechanism employed, e.g., magnetic, optic, or magneto-optic. Possible protective layers include anti-corrosive materials such as nitrides (e.g., silicon nitrides and aluminum nitrides, among others), carbides (e.g., silicon carbide and others), oxides (e.g., silicon dioxide and others), plastics (e.g., polyacrylates, polycarbonates, and other plastics mentioned above), carbon film (diamond, diamond-like carbon, and the like) among others, and combinations comprising at least one of the foregoing.

A dielectric layer(s), which is often employed as a heat controller in some storage schemes, can typically have a thickness of up to or exceeding 1,000Å and as low as 200Å. Possible dielectric layers include nitrides (e.g., silicon nitride, aluminum nitride, and others); oxides (e.g., aluminum oxide); carbides (e.g., silicon carbide); and combinations comprising at least one of the foregoing, among other materials compatible within the environment and preferably, not reactive with the surrounding layers.

The reflective layer(s), if needed, should have a sufficient thickness to reflect a sufficient amount of energy to enable data retrieval. Typically the reflective layer(s) can have a thickness of up to 700Å, with a thickness of 300Å to 600Å generally preferred. Possible reflective layers include any material capable of reflecting the particular energy field, including metals (e.g., aluminum, silver, gold, titanium, and alloys and mixtures comprising at least one of the foregoing, and others). In addition to the data storage layer(s), dielectric layer(s), protective layer(s) and reflective layer(s), other layers can be employed such as lubrication layer and others. Useful lubricants include fluoro compounds, especially fluoro oils and greases, and the like.

Example 1: A plastic coating that was spin coated on to a glass substrate was formed having a Rₐ of about 4Å; asperities numbered less than 10 having a height of greater than 25 nm; a microwaviness of 25 nm over a 4mm² area; a thickness uniformity of ±10% of the nominal thickness. A coating solution of 18 wt% Ultem® 1000 (based upon the total weight of the solution) in 50:50 anisole(polarity index of 3.8):acetophenone (polarity index of 4.8) solution was filtered to a nominal particle size of 0.05 µm. The filtered solution having a viscosity of 1,200 centipoise was dynamically dispensed on the substrate in a spiral fashion while the substrate was spinning at a rate of 150 rpm on the chuck shown in Figure 8. The coating was then spun at 3,500 rpm for 35 seconds. The coated substrate was then annealed at 300°C for 2 hours (85°C over the Ultem® glass transition temperature (T_{g}) of 217°C).

Example 2: A plastic coating that was spin coated onto a glass substrate was formed having a Rₐ of about 4Å; a microwaviness of 25 nm over a 4 mm² area; a thickness uniformity of ±10% nominal thickness. A coating solution of 16 wt% oxydianhydride/metaphenylenediamine polyamic acid (based upon the total weight of the solution) in 40:60 anisole:NMP (N-methylpyrrolidone; polarity index of 6.7) solution filtered to a nominal particle size of 0.2 µm. The filtered solution having a viscosity of 360 centipoise was dynamically dispensed on the substrate in a spiral fashion while the substrate was spinning at a rate of 150 rpm on the chuck shown in Figure 8. The filtered solution was dynamically dispensed on the substrate in an arc fashion while the coating was then spun at 3,500 rpm for 35 seconds. The coated substrate was then annealed at 350°C for 1 hour ( 50°C over the polyetherimide T_{g} of about 300°C).

Example 3: A plastic coating that was spin-coated onto a glass substrate was formed having a Rₐ of about 5Å; a microwaviness of about 25 nm over a 4 mm² area; a thickness uniformity of ±10% nominal thickness. A coating solution of 18 wt% Ultem 1000 (based upon the total weight of the solution) in 50:50 anisole:gammabutyrolactone solution was filtered to a nominal particle size of 0.2 µm. The filtered solution having a viscosity of 1,200 centipoise was dynamically dispensed on the substrate in a spiral fashion while the substrate was spinning at a rate of 150 rpm on the chuck shown in Figure 8. The coating was then spun at 3,500 rpm for 35 seconds. The coated substrate was then annealed at 300°C for 2 hours ( 85°C over the Ultem® T_{g}).

By employing.the chuck design, solvent blend, dispensing techniques, thermal annealing, and/or filtering, plastic coated substrates that meet stringent surface quality requirements are readily produced.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A spin coating process, comprising:
dispensing a solution of a solution solvent and 3 to 30 wt% plastic, based upon the total weight of the solution, to a substance,
spinning the substrate; and
removing the solution solvent to produce a coated substrate comprising a coating having less than or equal to 10 asperities over the entire surface of the coated substrate, **characterized in that**
the solution solvent further comprises a first solvent having a boiling point of 125°C to 180°C and a second solvent having a boiling point of 190°C or greater; and
spinning the substrate to coat the substrate with the solution.

2. The process of Claim 1, wherein the solution comprises 5 wt% to 50 wt% of the first solvent, based upon the total weight of the solution solvent.

3. The process of Claim 1 or Claim 2, wherein the first solvent is selected from the group consisting of anisole, xylene, and combinations comprising at least one of the foregoing first solvents.

4. The process of any of Claims 1- 3, wherein the second solvent is selected from the group consisting of cresol, gamma-butyrolactone, acetophenone, N-methyl-pyrrolidone, and combinations comprising at least one of the foregoing second solvents.

5. The process of any of Claims 1 - 4, further comprising dispensing the solution while moving a dispenser over the substrate via a spiral translation.

6. The process of any of Claims 1 - 4, further comprising dispensing the solution while moving a dispenser over the substrate via an are translation.

7. The process of any of Claims 1 - 6, further comprising spinning the substrate at a slower speed during the dispensing and at a faster speed during the spinning to coat the substrate.

8. The process of any of Claims 1 - 4, wherein the plastic comprises a thermoplastic polymer having a weight average molecular weight of 10,000 to 500,000 Daltons

9. The process of any of Claims 1 -8, where the plastic is selected from the group consisting of polyimides, polyetherimides, polysulfones, polyethersulfones, polycarbonates, polyester carbonates, polyphenylene ethers, polyarylates, and combinations comprising at least one of the foregoing plastics.

## Patentansprüche

1. Schleuderbeschichtungsverfahren, umfassend:
Verteilen einer Lösung von einem Lösungsmittel der Lösung und 3 bis 30 Gew.-% Kunststoff auf der Basis des Gesamtgewichts der Lösung auf einem Substrat;
Schleudern des Substrats; und
Entfernen des Lösungsmittels der Lösung zur Herstellung eines beschichteten Substrats, umfassend eine Beschichtung mit weniger als oder gleich 10 Unebenheiten über der gesamten Oberfläche des beschichteten Substrats, **dadurch gekennzeichnet, dass**
das Lösungsmittel der Lösung des weiteren ein erstes Lösungsmittel mit einem Siedepunkt von 125°C bis 180°C und ein zweites Lösungsmittel mit einem Siedepunkt von 190°C oder größer umfasst;
und Schleudern des Substrats zum Beschichten des Substrats mit der Lösung.

2. Verfahren nach Anspruch 1, wobei die Lösung 5 Gew.-% bis 50 Gew.-% des ersten Lösungsmittels auf der Basis des Gesamtgewichts des Lösungsmittels der Lösung umfasst.

3. Verfahren nach Anspruch 1 oder Anspruch 2, wobei das erste Lösungsmittel ausgewählt ist aus der Gruppe, bestehend aus Anisol, Xylol und mindestens eines der vorstehenden ersten Lösungsmittel umfassenden Kombinationen.

4. Verfahren nach einem der Ansprüche 1-3, wobei das zweite Lösungsmittel ausgewählt ist aus der Gruppe, bestehend aus Kresol, gamma-Butyrolacton, Acetophenon, N-Methylpyrrolidon und mindestens eines der vorstehenden zweiten Lösungsmittel umfassenden Kombinationen.

5. Verfahren nach einem der Ansprüche 1-4, des Weiteren umfassend das Verteilen der Lösung unter Bewegung eines Spenders über das Substrat durch Spiraltranslationsbewegung.

6. Verfahren nach einem der Ansprüche 1-4, des Weiteren umfassend das Verteilen der Lösung unter Bewegung eines Spenders über das Substrat durch Bogentranslationsbewegung.

7. Verfahren nach einem der Ansprüche 1-6, des Weiteren umfassend das Schleudern des Substrats mit einer langsameren Geschwindigkeit während des Verteilens und einer schnelleren Geschwindigkeit während des Schleuderns zum Beschichten des Substrats.

8. Verfahren nach einem der Ansprüche 1-7, wobei der Kunststoff ein thermoplastisches Polymer mit einem massegemittelten Molekulargewicht von 10.000 bis 500.000 Dalton umfasst.

9. Verfahren nach einem der Ansprüche 1-8, wobei der Kunststoff ausgewählt ist aus der Gruppe, bestehend aus Polyimiden, Polyetherimiden, Polysulfonen, Polyethersulfonen, Polycarbonaten, Polyestercarbonaten, Polyphenylenethern, Polyacrylaten und mindestens einen der vorstehenden Kunststoffe umfassenden Kombinationen.

## Revendications

1. Un processus de revêtement centrifuge, comprenant :
la distribution, sur un substrat, d'une solution d'un solvant de solution et de 3 à 30 % en poids de plastique par rapport au poids total de la solution,
la centrifugation du substrat ; et
l'élimination du solvant de solution pour produire un substrat revêtu comprenant un revêtement présentant une quantité inférieure ou égale à 10 aspérités sur la totalité de la surface du substrat revêtu, **caractérisé en ce que** le solvant de solution comprend en outre un premier solvant présentant un point d'ébullition entre 125°C et 180°C et un second solvant présentant un point d'ébullition à 190°C ou plus ; et
la centrifugation du substrat sert à revêtir le substrat avec la solution.

2. Le processus de la revendication 1, dans lequel la solution comprend 5 % en poids à 50 % en poids du premier solvant, par rapport au poids total du solvant de solution.

3. Le processus de la revendication 1 ou de la revendication 2, dans lequel le premier solvant est choisi dans le groupe formé par l'anisole, le xylène et leurs combinaisons comprenant au moins l'un des premiers solvants précédents.

4. Le processus de l'une des revendications 1 à 3, dans lequel le second solvant est choisi dans le groupe formé par le crésol, la gamma-butyrolactone, l'acétophénone, le N-méthyl-pyrrolidone et leurs combinaisons comprenant au moins l'un des seconds solvants précités.

5. Le processus de l'une des revendications 1 à 4, comprenant en outre la distribution de la solution tout en déplaçant un distributeur au-dessus de la surface via une translation spirale.

6. Le processus de l'une des revendications 1 à 4, comprenant en outre la distribution de la solution tout en déplaçant un distributeur au-dessus du substrat via une translation suivant un arc.

7. Le processus de l'une des revendications 1 à 6, comprenant en outre la centrifugation du substrat à une vitesse inférieure durant la distribution et à une vitesse supérieure durant la centrifugation servant à revêtir le substrat.

8. Le processus de l'une des revendications 1 à 7, dans lequel le plastique comprend un polymère thermoplastique présentant un poids moléculaire moyen pondéral de 10 000 à 500 000 daltons.

9. Le processus de l'une des revendications 1 à 8, dans lequel le plastique est choisi dans le groupe formé par les polyimides, les polyétherimides, les polysulfones, les polyéthersulfones, les polycarbonates, les carbonates de polyester, les éthers de polyphénylène, les polyarylates et les combinaisons comprenant au moins l'un des pastiques précités.
